# EUROPEAN PATENT SPECIFICATION

(11) **EP 1 835 589 B1**
(45) Date of publication and mention of the grant of the patent: **27.02.2019**
(21) Application number: 06425183.8
(22) Date of filing: 17.03.2006
(51) Int. Cl.: H02G 3/04

(54) **A RACEWAY WIRING AND A COVER TO BE COUPLED WITH SAID RACEWAY**
KABELKANAL UND ABDECKUNG FÜR DIESEN KABELKANAL
GOULOTTE ET COUVERCLE POUR CETTE GOULOTTE

(43) Date of publication of application: 19.09.2007
(73) Proprietor: Bocchiotti S.p.A. Societa' per l'Industria Elettrotecnica, 20127 Milano (IT)
(72) Inventor: Nardi, Ivo, 16016 Cogoleto (Genova) (IT)
(74) Representative: Crippa, Paolo Ernesto

(56) References cited:
- US-A- 4 640 314
- US-A- 6 044 598
- US-B1- 6 903 265

## Description

The present invention relates to the field of raceways for housing electrical wires and the like.

Electrical systems in dwellings or offices are provided by installing suitable raceways for wirings which are arranged laterally to the walls or within gaps that are formed, for example, in the floorings. Thereby, not only the installation of the systems is made easier, but also the electrical wires are easily accessed in view of probable subsequent maintenance operations.

In addition to the electrical wires, these raceways are also suitable to hold transmission means (e.g. coaxial cables, duplex cables, optical fibers) thereby providing the integrated supply of electricity - voice - data by means of only one duct network.

A raceway for electrical wires is generally made of insulating material, such as plastics, and comprises a bottom wall to be connected to the surfaces on which the raceway has to be installed, and two side walls made as one piece with the bottom wall.

The bottom wall and the side walls define a housing room being the available volume of the raceway, and the wires being laid therein.

Control devices, electric sockets or similar equipment (commonly known as the modular devices) are mounted, either snap-mounted or by means of suitable tools, between the free ends of the side walls of the raceway.

Furthermore, the housing room for the wires is closed again by closure devices or removable covers, typically made of plastics, which are affixed to the side walls of the raceway suitable to generally ensure a determined level of protection to the wires being housed within the raceway against external bodies such as, particularly, dust.

In very large rooms, or however rooms having walls and posts defining a lot of corners, several raceways having different lengths are usually employed which are joined to each other by applying suitable fittings such as exterior angle-shaped couplings, interior angle-shaped couplings, joints and others. This type of fittings are also snap-fitted between the free ends of the raceway side walls.

The conventional fittings thus mounted to an individual raceway or more raceways have a drawback in that they easily come off when they are hit or inadvertedly stressed, for example because of the direct action by a person or any object, such as a chair or moving trolley.

It should be noted that this problem may occur both with mounting configurations in which the raceway is oriented parallel to the floor (functioning as a skirting-board or skirting of a wall) and with mounting configurations in which the raceway is vertically fixed thereto, such as parallel to a door jamb.

When these fittings are uncoupled, the electrical wires housed within the raceway are directly accessible from the outside, thereby compromising the safety of the electrical system, room where it is installed, people, and in some cases this may also cause damages to the electrical system or breakage of the fittings (for example, when they fall from above).

US 6,903,265 relates to hinged duct system having a base and a cover hingedly attached to the base in which the flexible member is disposed along the hinge mechanism. A layer of a co-extruded flexible vinyl member is arranged on the cover which prevents the same from sliding axially with respect to the base.

The object of the present invention is to provide a raceway to be coupled to a fitting that does not have the drawbacks as set forth above with reference to the know art, such as particularly the one associated with the inadvertent coming off of the fitting and for example which is also capable of facilitating the mounting and dismounting of the fitting from the raceway by an operator.

The object of the present invention is a housing assembly for electrical wires or the like such as defined and characterized in the appended claims.

The characteristics and advantages of the present invention will be made apparent from the detailed description below of exemplary and non-limiting embodiments thereof, in relation with the annexed drawings, in which:
- - Fig. 1 shows a front view of a raceway and a respective fitting in a mounting configuration according to an example of the invention;
- - Fig. 2 shows a perspective view of a portion of the mounting configuration in Fig. 1;
- - Fig. 3a and 3b show two perspective views of a fitting to be used in the mounting configuration from Fig. 1 and 2;
- - Fig. 4 shows a perspective view of an example of fitting to be coupled to a raceway, and
- - Fig. 5 shows a front view of a portion of a further example of fitting in an alternative version with respect to that of Fig. 4 and in a mounting configuration on a respective raceway.

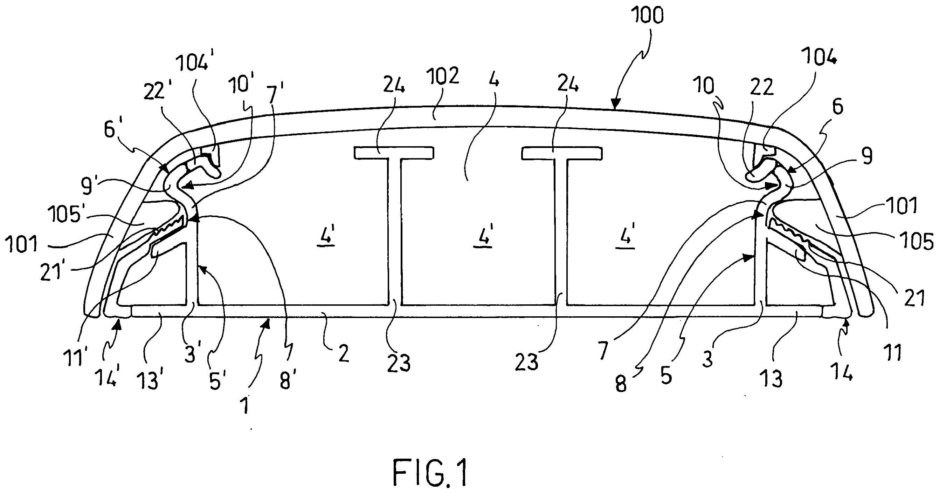

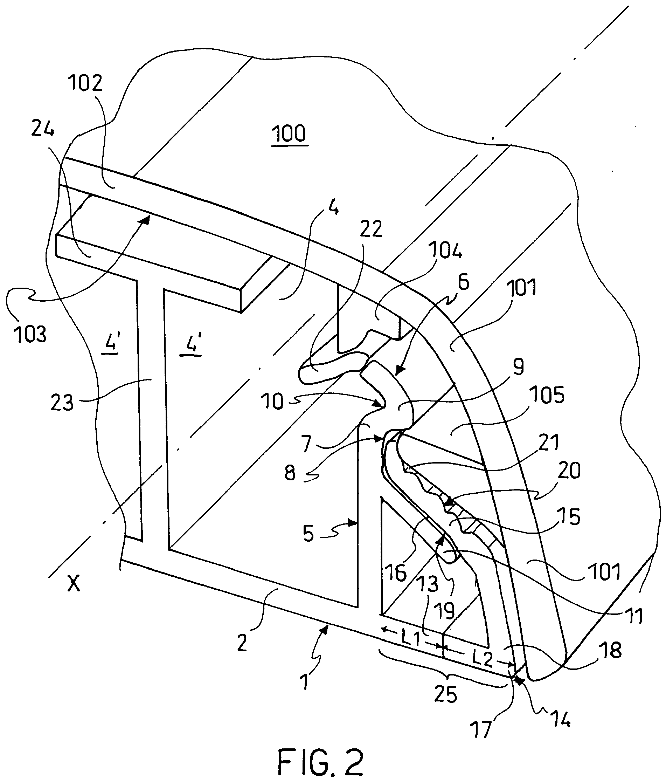

With reference to Fig. 1 and 2, an example of raceway for electrical wires or the like, which is generally indicated with the numeral 1, comprises a plane bottom wall 2 and two side walls 3 and 3' substantially vertical relative to the bottom wall 2. The bottom wall 2 and the side walls 3 and 3' extend parallel to a longitudinal axis X of the raceway (indicated only in Fig. 2) and define a housing seat 4 for the electrical wires or the like. It should be noted that, typically, the electrical wires can be inserted within the housing seat 4 such as to be substantially laid parallel to the longitudinal axis X.

To simplify the present description, particular reference will now be made only to the side wall 3 because it is shown in both Fig. 1 and 2. The wall 3' is substantially symmetrical to the wall 3 relative to a plane perpendicular to the bottom wall 2 and parallel to the longitudinal axis X. In Fig. 1 the numerals used to describe the side wall 3 will be however reported for the side wall 3' with a prime added thereto.

The raceway 1 is provided, preferably at the side wall 3, with mechanical means for being fixed (advantageously, in a reversible manner) to a fitting 100 (only partially seen in Fig. 1 and 2), such as, for example, a coupling between two raceways of a type known in the field (exterior corner). As will be understood from the example described herein below, these fixing means to the fitting 100 can be divided, functionally and/or structurally, between friction means and support means for the friction means.

In greater detail, the side wall 3 comprises a first portion 5, which in the example is normal to the bottom wall 2 and a second portion 6 being the end of the side wall 3. Particularly, the second portion 6, from the junction with the first portion 5, has a first curved tract 7 suitable to define a concavity 8 (facing the outside of the housing seat 4) and a second curved tract 9, joined to the first curved tract 7. In the particular example of Fig. 1 and 2, the second curved tract 9 defines a further concavity 10 facing the inside of the housing seat 4.

Advantageously, to the second portion 6 there is joined a flap 22 having the function of applying a frictional (and, advantageously also interference) action to a part of the fixing means 104 being associated with the fitting 100.

Furthermore, the side wall 3 of the particular embodiment as shown in Fig. 1 and 2 comprises an optional tab 11 that protrudes from the outside of the raceway and runs, according to the example, throughout the length of the raceway. Particularly, the tab 11 extends from the first portion 5 of the side wall 3 such as to limit the concavity 8 in the lower part thereof, i.e. towards the bottom 2.

It should be observed that, according to a preferred version, a covering 14 is applied to the tab 11 and within the concavity 8, which in the same manner as the flap 22, is such as to provide friction with suitable portions 105 of the fixing means associated with the fitting 100, which are intended to contact this covering.

It should be observed that the second portion 6 being provided with the flap 22 and cavity 8 and the tab 11 being provided with the covering 14 are a particular example of means for fixing the raceway 1 to the fitting 100. Particularly, the flap 22 and the covering 14 have the function of providing friction (in addition, also interference) with the fixing means of the fitting 100, such that any unintentional release of the same or sliding of the same along the raceway 1 is counter-acted, and the tab 11 are an example of support means for the flap 22 and covering 14, respectively.

As regards to the fabrication materials, it should be observed that in the field of raceways for housing wirings, the raceway is normally made as one piece and of a single material (typically of plastics) having a determined rigidity. The flap 22 and, when provided, the covering 14 have a different rigidity, particularly lower than that of the supports (second portion 6 and tab 11) on which they are distributed.

As is known, the rigidity of a material is the capacity of withstanding elastic movements under stress. Furthermore, the rigidity of a body, such as the flap 22 or the covering 14 is given by the rigidity of the material composing the same together with the elasticity module depending on dimensional characteristics such as, particularly, the thickness of the body. In the instant case, both the rigidity and the thickness of the material cause the flap 22 and covering to be less rigid, or in an equivalent manner, softer than the second portion 6 and tab 11. The effect of this greater softness upon coupling with the fitting 100 will be appear more clearly below.

Particularly, it should be noted that the raceway 1 and covering 14 and flap 22 may be manufactured from the same conventional plastic material, such as a polyvinyl resin, and particularly PVC (polyvinylchloride), but such as to have a different rigidity from each other. In greater detail, preferably the flap 22 (or the covering 14 or both these elements 22 and 14) is made of PVC with a lower rigidity than the raceway 1. To the purpose of obtaining this lower rigidity with respect to that of the raceway, the PVC of the flap 22 and/or covering 14 (when provided) has a plasticizer ratio equal to a percentage ranging between 20-50% (by weight) preferably within the narrower range 30-40%. The raceway 1 has a plasticizer ratio lower than that of the flap and/or covering such that it has a greater rigidity than the flap and/or covering.

In a further embodiment, the flap 22 and/or the covering 14 (when provided) may be manufactured from thermoplastic rubber having a hardness, expressed in Shore A, ranging between 20-80, preferably between 50-70.

The raceway 1 provided with the flap 22 and the covering 14 can be manufactured by means of a co-extrusion process.

Before describing the fitting 100 and the way it is coupled to the raceway 1, other aspects of the raceway will be illustrated in accordance with preferred exemplary embodiments. Particularly, referring back to Fig. 2, the bottom wall 2 of the raceway 1 extends by a first length L1 outside the housing seat thereby defining an extension 13 in the transversal direction relative to the side wall 3.

Furthermore, the covering 14 has a first portion 15 having a first surface 19 in contact with an upper face 16 of the tab 11 and a second portion 17 joined to the extension 13 of the bottom 2. The first portion 15 of the covering 14 is joined to the second portion 17 by a third portion 18 that results inclined, from the junction with the second portion 17, towards the side wall 3. The second portion 17 extends from the junction with the extension 13 by a second length L2 and still in a substantially transversal direction to the side wall 3.

It should be noted that the extension 13 and the second portion 17 form as a whole a spacing element 25 suitable to ensure that the raceway 1 is positioned in conformity with the regulatory provisions in force in terms of electrical safety, according to which the minimum distance between a raceway, the bottom wall thereof being connected to a surface (e.g. a wall) and a reference plane (e.g. a floor). It should be noted that, in the example described, this minimum distance is given by the sum of the first length L1, second length L2 and thickness of the first portion 5 of the side wall 3.

According to a particular embodiment of the invention, the first portion 15 of the covering 14 comprises a second surface 20, facing the first surface 19, on which an optional plurality of ribs 21 are formed which, advantageously, allow improving the interference between the fitting 100 and the raceway and thus the coupling to each other.

Referring back to Fig. 1, the raceway 1 can comprise a plurality of inner walls 23 which extend parallel to the longitudinal axis X of the raceway and transversal to the bottom wall 2, respectively. The plurality of side walls 23 advantageously allows dividing the housing seat 4 in a plurality of secondary seats 4' each of which can be intended, for example, to house electrical wires of a particular type. In the example from Fig. 1, the raceway 1 comprises two inner walls, both designated with numeral 23, such as to divide the housing seat 4 into three secondary seats, all being designated with 4'. Advantageously, each of the inner walls 23 comprises, on the opposite end to the bottom wall 2, a holding element 24 arranged parallel to the bottom wall and extending parallel to the longitudinal axis X.

In the example as illustrated in the figures, each of the holding elements 24 has a profile section such as to define a substantially T-shaped profile together with the respective secondary wall. Thereby, each holding element partially overlaps the aperture through which the electrical cables are housed within the respective intermediate seat. This solution is very useful when an electrical cable housed within a secondary housing seat passes over the inner wall and reaches the adjacent intermediate housing seat. This drawbacks mainly occurs when a large amount of wires are excessively compressed and packed within the same housing seat to an extent of applying a certain pressure on the cover.

Typically, these inner walls 23 are made of the same material as that of the bottom 2 and side walls 3 and 3', with a greater rigidity than that of the flap 22 and covering 14.

With particular reference to Fig. 1, the fitting 100 is only partially shown and has a profile comprising first and second tracts 101 which are joined to each other by means of a main tract 102. The first and second tracts 101 are substantially transversal to the main tract 102.

The fitting 100 from Fig. 2 will be now considered. As shown in detail in Fig. 2, the fitting 100 comprises an inner surface 103 on which there is formed a first rib 104 protruding from the inner surface in the direction substantially perpendicular to the main tract 102. On the inner surface 103 of the fitting 100 there is also formed a second rib 105 of the fitting 100 which protrudes from an intermediate region of the tract 101 of the fitting 100. The second rib 105 has a profile substantially complementary to the concavity 8 formed on the side wall 3 of the raceway and partially covered by the covering 14.

Generally, the first 104 and second 105 ribs are an example of further fixing means suitable to be engaged with the fixing means of the raceway 1. The numerals indicated in Fig. 2 relate to that part of fitting that can be associated to the side wall 3 of the raceway 1. In Fig. 1 and in Fig. 2 the numerals of the fitting that are indicated at the side wall 3 of the raceway 1 are reported with a prime being added thereto to designate those elements of the fitting which are associated with the side wall 3'.

Advantageously, the ribs 104 and 104' are formed on the inner surface 103 such as to be transversally aligned relative to the raceway longitudinal axis to function as a further stop for a further fitting, typically a cover (not shown in the figures), which can be slidingly mounted to the raceway and in combination with the fitting 100 such as to result as being partially covered by the fitting.

The fitting 100 is fabricated as one piece and particularly from a material having a greater rigidity than that of the flap 22 and covering 14. In the example described above, the plastic material composing the fitting is considered as being similar or identical to the plastic material composing the raceway 1. Thereby, the fitting 100, when it is fabricated in PVC, has a lower ratio of plasticizer than that of the flap and/or covering such as to have a greater rigidity.

As regards the coupling among the components described so far (the raceway 1 and fitting 100), referring to Fig. 2, the fitting 100 engages the raceway 1 such that the first rib 104 presses against the flap 22 of the side wall 3, the free end of which, as may be seen in the figures, tends to face the bottom wall 2. The flap 22 (having a lower rigidity than the rib 104) compresses and deforms (because it is provided with a flexibility) such as to be adhered to portions of the rib 104, generating a frictional force that counter-acts a releasing action of the fitting from the raceway. Advantageously, this flap 22 is sufficiently soft as not to be an obstacle to the application of the fitting or the voluntary removal of the same, while making inadvertent release more difficult due to the friction introduced, which hinders the movements along a direction transversal to the bottom 2.

Furthermore, the fitting 100 is coupled to the raceway 1 such that the second rib 105 (of greater rigidity) is snap-fitted within the respective concavity 8 by contacting the second surface 20 of the covering 14 (of lower rigidity) and thus creating an interference to the possible relative movement between raceway and fitting.

Particularly, the engagement of the second rib 105 with the covering 14 creates an interference suitable to restrain also the inadvertent sliding of the fitting relative to the raceway, in a direction parallel to the longitudinal axis. In the application of the fitting 100 to the raceway 1, both the flap 22 and the covering 14 are interposed between more rigid elements belonging to the raceway and the fitting.

In the example described, the optional provision of the plurality of grooves 21 advantageously contributes to make the interference action by the covering 14 even more reliable relative to the second rib 105.

In the example described above, reference has been made to a generic fitting 100. More particularly, the fitting 100 may be selected from a group comprising different types of fittings (of a conventional type) to be coupled to the raceway 1 or more than one raceway: coupling between raceways shaped with exterior angle (i.e. like the corner of a wall), interior angle, straight angle, joint (i.e. a T-shaped coupling having three branches), coupling between aligned raceways, raceway end element, box for modular device to be installed as a skirting.

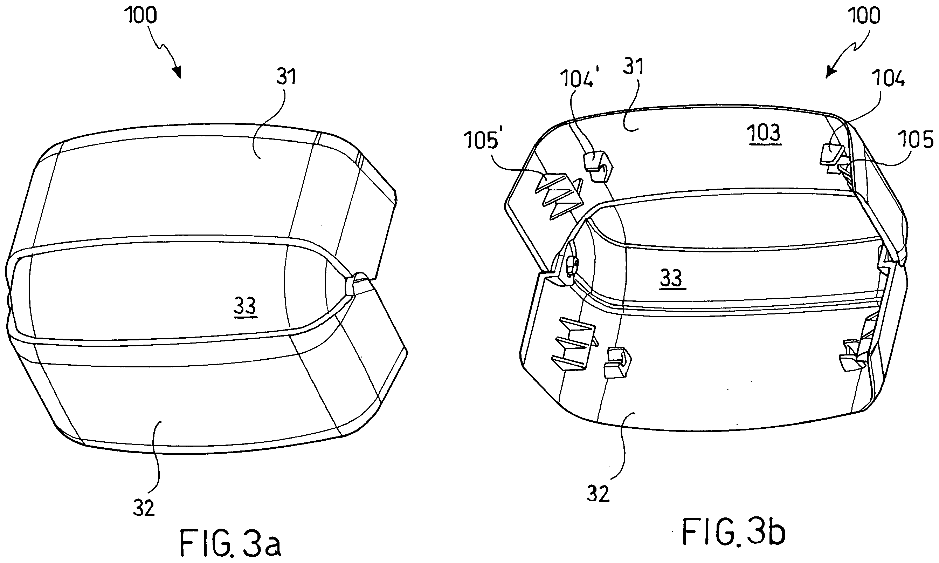

An example of an exterior-angle fitting is shown in Fig. 3a and 3b and generally designated, again, with numeral 100.

The exterior angle 100 comprises a first attachment portion 31 and a second attachment portion 32 and an angular portion 33 integral with the first attachment portion 31. The first 31 and second 32 attachment portions are movable relative to each other about an axis of rotation Y such as to conceal, either partially or totally, the angular portion 33 according to the angular distance that the exterior angle is intended to cover. Typically, the first and second attachment portions are arranged at an angular distance substantially equal to 90°.

The first 31 and second 32 attachment portions are both identical to the portion of fitting 100 as shown in Fig. 1 and 2. Particularly, the first angular portion 31 has an inner surface 103 having the first ribs 104 and 104' and the second ribs 105 and 105' as described above. The first 31 and second 32 attachment portions are each suitable to be coupled to the raceway 1, a respective cover being associated therewith.

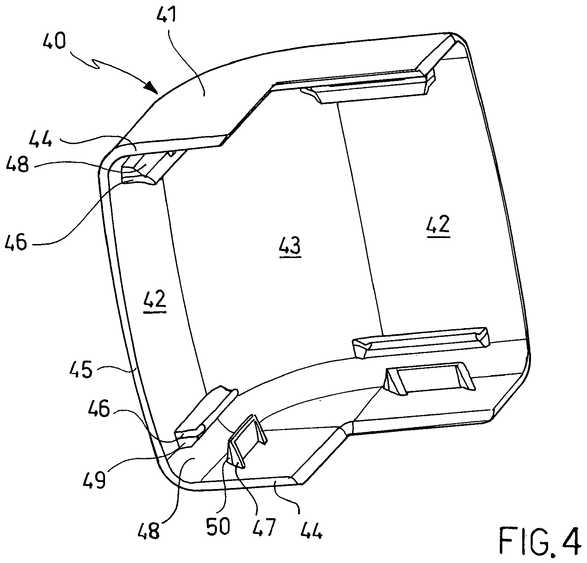

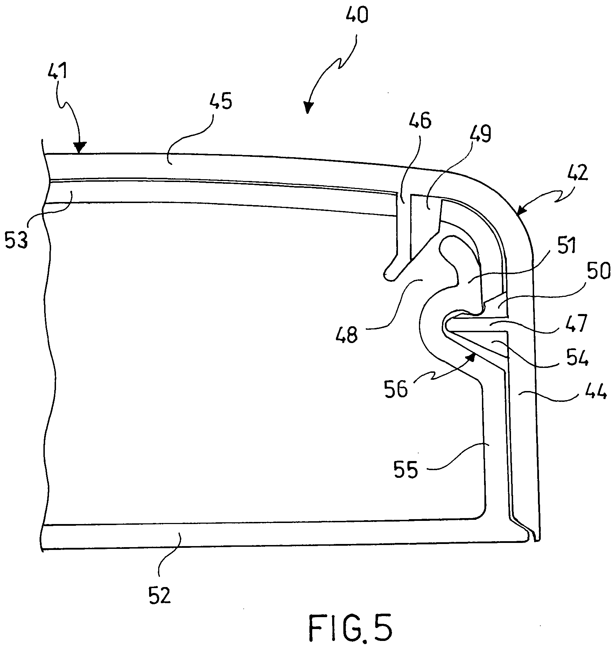

With reference to the examples illustrated in Fig. 4 and 5, frictional means (similar to those described above) are associated to the fitting, either as an alternative or in addition to those associated with the raceway 1. The fitting from Fig. 4 being designated with the numeral 40 is of the type with exterior angle having a body 41 comprising two attachment parts 42 that are joined to each other by an angular part 43. The body 41 is shaped as to be coupled by being overlapped to an exterior angle of 90° (such as the corner of a wall). Each of the two attachment parts 42 comprises two outer sides 44 being counter-posed and joined to each other by a main side 45. The two outer sides 44 are substantially transversal to the main side 45.

With particular reference to Fig. 5, the attachment part 42 (shown only partially) at an end of the respective main side 45 has a main tab 46 transversally protruding relative to the main side 45. Furthermore, on the outer side 44 there is formed a further side tab 47 transversally extending relative to the respective outer side 44. It should be noted that the inner tab 46 forms with the respective side tab 47 a fitting seat 48 suitable to be slidingly engaged with a respective attachment element 51 formed on a side wall 55 of a raceway 52 (similar to the raceway 1 as described above) and capable of being coupled to said fitting 40. In the example from Fig. 5, there is further shown a cover 53 coupled to the raceway 52. Preferably, the cover is partially covered by the fitting (this characteristic is not shown in Fig. 4).

It should be noted that, in this example, when the cover is caused to slide on the raceway, it abuts against the inner tab 46.

Referring back to Fig. 4, the inner tab 46 and side tab 47 support a first 49 and second 50 covering elements, respectively, both facing the fitting seat 48 (which may be obtained, for example, by means of insert-moulding). The first and second covering elements are an example of similar friction means having similar functions and made of similar or identical materials as those described for the flap 22. Particularly, the elements 49 and 50 have a lower rigidity than the respective support tabs and also lower than the fixing means of the raceway 1 (when the latter is not provided with the flap 22 or covering 14) with which they are intended to interact.

Due to this difference in rigidity, a friction, and advantageously an interference can be provided by the first and second covering elements 49 and 50 such as to restrain the mutual sliding relative to each other and consequently prevent that the fitting may come off in case of accidental impact. Furthermore, the soft coverings however allow the fitting to be easily mounted to the raceway.

The fitting 40 of Fig. 4 may further comprise, according to a particularly advantageous version, a further covering element 54 also formed on the side tab 47, though on the opposite side relative to the second covering element 50. The further covering 54 generates a further interference between the fitting and a shaped portion of a side wall 55 of the raceway suitable to engage the side tab when the fitting is mounted to the raceway. Particularly, the further covering element 54 is suitable to generate friction against a region 56 of the side wall 55.

It should be observed that the fixing means described with reference to the figures, both for the raceway and the fittings are only exemplary, and thus different types of fixing can be used, such as hook and/or fitting elements, either of the snap type or not, with cavities and gripping teeth in various shapes. Furthermore, the elements suitable to provide friction being placed on the raceway (such as the flap 22 or the covering 14) can either be evenly arranged all along the raceway or distributed only in several tracts thereof.

All the embodiments described above (friction means having a different rigidity from their supports, either placed on the raceway, fitting or both components) are particularly advantageous for the operator of the field. In fact, as already said above, they allow reducing the possibility that a fitting may inadvertently come off, and in some particular case, also slide relative to the raceway, without complicating the operations of installation or removal of the same.

Obviously, to the components (the raceway and fitting) and the assembly of components of the present invention, those skilled in the art, aiming at satisfying contingent and specific requirements, may carry out a number of modifications and variations, all being however contemplated within the scope of protection of the invention, such as defined in the annexed claims.

## Claims

1. A housing assembly (1, 100) comprising:
- a raceway (1) for holding electrical wires or the like comprising a bottom wall (2) and two side walls (3, 3') extending from said bottom wall, the bottom wall (2) and the two side walls (3, 3') defining an housing seat for the electrical wires or the like, said side walls (3, 3') being provided with respective first fixing means (6-11);
- a fitting (100) comprising second fixing means (104, 105) suitable to engage said first fixing means in order to apply the fitting to the raceway, said fitting (100) comprising a first (101) and second (101') tract joined by a main tract (102), said first (101) and second (101') tract being substantially transversal to said main tract (102), said second fixing means (104, 105) comprising ribs (104, 104') formed on an inner surface (103) of said main tract (102), said ribs (104) protruding from the inner surface in a direction substantially perpendicular to the main tract (102), **characterised in that** said first fixing means comprise support means (6-11) and friction means (22) distributed on the support means, said support means (6-11) comprising, for at least one of said side walls, an end portion (6) of the corresponding side wall, said friction means (22) being made of a material having a first rigidity different from a second rigidity associated to the support means, said friction means comprising, for at least one of said side walls, a flap (22) extending parallel to at least a part of a longitudinal axis of the raceway and such as to have a side joined to the end portion and an opposite side free, which faces the housing seat,
and **in that** said flap (22) is interposed between said first fixing means (6-11) and said ribs (104, 104') when the fitting is applied to the raceway, said ribs (104, 104') of the fitting pressing against the flap (22) of the side wall (3).

2. The housing assembly (1, 100) of claim 1, wherein said flap (22) is distributed on said first fixing means (6-11).

3. The housing assembly (1, 100) of claim 1, wherein said first rigidity is lower than the second rigidity such that said flap is capable of being pressed to be substantially adhered to portions of the second fixing means (104, 105, 104', 105') such as to counter-act any inadvertent release of the fitting from the raceway.

4. The housing assembly (1, 100) of claim 1, wherein said flap is flexible such as to be deformed under the action of the second fixing means of the fitting.

5. The housing assembly (1, 100) of claim 4, wherein said flap, when it is deformed, generates interference with the second fixing means by counter-acting an inadvertent decoupling by the fitting.

6. The housing assembly (1, 100) of at least one of the preceding claims, wherein:
- said support means (6, 6') comprise a portion of a side wall of the raceway having a profile suitable to define a concavity (8, 8') facing the outside of the housing seat (4), said concavity extending parallel to the longitudinal axis of the raceway; a part of the second fixing means (105, 105') of the fitting being suitable to fit within the concavity;
- said friction means comprise a covering element (14, 14') for at least a part of the concavity (8, 8') such as to be interposed between the concavity and said part of the second fixing means, said covering element (14, 14') being arranged on a corresponding portion of said first support means (11).

7. The housing assembly (1, 100) of at least one of the preceding claims, wherein the covering element (14, 14') is such as to generate friction with said part of the second fixing means such as to counter-act a sliding by the fitting relative to the raceway in the direction of the longitudinal axis.

8. The housing assembly (1, 100) of claim 7, wherein the covering element (14, 14') comprises a plurality of ribs (20, 20') suitable to cooperate with said part of the second fixing means (105, 105') to counter-act said sliding.

9. The housing assembly (1, 100) of claim 1, wherein the bottom wall (2) comprises at least one spacing element (13, 13') extending outside the housing seat, which is suitable to provide a minimum distance for the positioning of the raceway relative to a reference plane, said at least one spacing element (13, 13') extending parallel to the longitudinal axis of the raceway.

10. The housing assembly (1, 100) of claim 9, wherein the reference plane belongs to the group consisting of: a wall, a floor, a ceiling.

11. The housing assembly (1, 100) of claim 6, wherein said concavity (8, 8') and the covering element (14, 14') are such as to be snap-engaged with said part of the second fixing means.

12. The housing assembly (1, 100) of claim 7, wherein the plurality of ribs (20, 20') suitable to cooperate with the second fixing means (105, 105') are distributed on a first portion (15, 15') of the covering element (14, 14').

13. The housing assembly (1, 100) of any preceding claims, wherein the friction means and the support means are co-extruded, the raceway being made of plastic material.

14. The housing assembly (1, 100) of claim 1, wherein the raceway (1) further comprises at least one partition wall (23) extending in a substantially vertical direction from the bottom wall (2) and parallel to the longitudinal axis of the raceway (1), said partition wall (23) dividing the housing seat (4) in further secondary housing seats (4').

15. The housing assembly (1, 100) of claim 1, wherein said friction means comprise plastic material.

16. The housing assembly (1, 100) of claim 15, wherein said plastic material is a polyvinyl resin or a thermoplastic rubber.

17. The housing assembly (1, 100) of claim 16, wherein said polyvinyl resin is polyvinylchloride, PVC.

18. The housing assembly (1, 100) of claim 17, wherein said polyvinyl resin comprises a plasticizer in a weight ratio ranging between 20-50 %, preferably ranging between 30-40 %.

19. The housing assembly (1, 100) of claim 16, wherein said thermoplastic rubber has a Shore A hardness ranging between 20-80, preferably ranging between 50-70.

## Patentansprüche

1. Gehäuseanordnung (1, 100), umfassend:
- einen Kabelkanal (1) zum Halten elektrischer Kabel oder dergleichen, umfassend einen untere Wand (2) und zwei Seitenwände (3, 3'), welche sich von der unteren Wand erstrecken, wobei die untere Wand (2) und die beiden Seitenwände (3, 3') einen Gehäusesitz für die elektrischen Kabel oder dergleichen definieren, wobei die Seitenwände (3, 3') mit jeweiligen ersten Befestigungsmitteln (6 - 11) versehen sind;
- eine Fassung (100), umfassend zweite Befestigungsmittel (104, 105), welche dazu geeignet sind, mit den ersten Befestigungsmitteln einzugreifen, um die Fassung auf den Kabelkanal aufzubringen, wobei die Fassung (100) einen ersten (101) und einen zweiten (101') Teil umfasst, welche durch einen Hauptteil (102) verbunden sind, wobei der erste (101) und der zweite (101') Teil im Wesentlichen transversal mit dem Hauptteil (102) sind, wobei die zweiten Befestigungsmittel (104, 105) Rippen (104, 104') umfassen, welche an einer inneren Fläche (103) des Hauptteils (102) gebildet sind, wobei die Rippen (104) von der inneren Fläche in einer zu dem Hauptteil (102) im Wesentlichen rechtwinkligen Richtung vorstehen, **dadurch gekennzeichnet, dass** die ersten Befestigungsmittel Halterungsmittel (6 - 11) und Reibmittel (22) umfassen, welche an den Halterungsmitteln verteilt sind, wobei die Halterungsmittel (6 - 11) für wenigstens eine aus den Seitenwänden einen Endabschnitt (6) der entsprechenden Seitenwand umfassen, wobei die Reibmittel (22) aus einem Material hergestellt sind, welches eine erste Steifigkeit aufweist, welche von einer zweiten Steifigkeit verschieden ist, welche den Halterungsmitteln zugeordnet ist, wobei die Reibmittel für wenigstens eine aus den Seitenwänden eine Klappe (22) umfassen, welche sich parallel zu wenigstens einem Teil einer longitudinalen Achse des Kabelkanals und derart erstreckt, dass sie eine mit dem Endabschnitt verbundene Seite und eine entgegengesetzte freie Seite aufweist, welche zu dem Gehäusesitz weist, und
dass die Klappe (22) zwischen den ersten Befestigungsmitteln (6 - 11) und den Rippen (104, 104') angeordnet ist, wenn die Fassung auf den Kabelkanal aufgebracht ist, wobei die Rippen (104, 104') der Fassung gegen die Klappe (22) der Seitenwand (3) drücken.

2. Gehäuseanordnung (1, 100) nach Anspruch 1, wobei die Klappe (22) an den ersten Befestigungsmitteln (6 - 11) verteilt ist.

3. Gehäuseanordnung (1, 100) nach Anspruch 1, wobei die erste Steifigkeit geringer ist als die zweite Steifigkeit, so dass die Klappe in der Lage ist, gedrückt zu werden, um im Wesentlichen an Abschnitten der zweiten Befestigungsmittel (104, 105, 104', 105') angeheftet zu sein, um einer beliebigen unbeabsichtigten Freigabe der Fassung von dem Kabelkanal entgegenzuwirken.

4. Gehäuseanordnung (1, 100) nach Anspruch 1, wobei die Klappe flexibel ist, um so unter der Wirkung der zweiten Befestigungsmittel der Fassung deformiert zu werden.

5. Gehäuseanordnung (1, 100) nach Anspruch 4, wobei die Klappe, wenn sie deformiert wird, eine Interferenz mit den zweiten Befestigungsmitteln durch Entgegenwirken einer unbeabsichtigten Entkopplung durch die Fassung erzeugt.

6. Gehäuseanordnung (1, 100) nach wenigstens einem der vorhergehenden Ansprüche, wobei:
- die Halterungsmittel (6, 6') einen Abschnitt einer Seitenwand des Kabelkanals umfassen, welcher ein Profil aufweist, welches dazu geeignet ist, eine Konkavität (8, 8') zu definieren, welche zu der Außenseite des Gehäusesitzes (4) weist, wobei sich die Konkavität parallel zu der longitudinalen Achse des Kabelkanals erstreckt; wobei ein Teil der zweiten Befestigungsmittel (105, 105') der Fassung dazu geeignet ist, in die Konkavität zu passen;
- die Reibmittel ein Abdeckelement (14, 14') für wenigstens einen Teil der Konkavität (8, 8') umfassen, um zwischen der Konkavität und dem Teil der zweiten Befestigungsmittel angeordnet zu werden, wobei das Abdeckelement (14, 14') an einem entsprechenden Abschnitt der ersten Halterungsmittel (11) angeordnet ist.

7. Gehäuseanordnung (1, 100) nach wenigstens einem der vorhergehenden Ansprüche, wobei das Abdeckelement (14, 14') derart ist, um Reibung zwischen dem Teil der zweiten Befestigungsmittel zu erzeugen, um einem Gleiten durch die Fassung relativ zu dem Kabelkanal in der Richtung der longitudinalen Achse entgegenzuwirken.

8. Gehäuseanordnung (1, 100) nach Anspruch 7, wobei das Abdeckelement (14, 14') eine Mehrzahl von Rippen (20, 20') umfasst, welche dazu geeignet sind, mit dem Teil der zweiten Befestigungsmittel (105, 105') zusammenzuwirken, um dem Gleiten entgegenzuwirken.

9. Gehäuseanordnung (1, 100) nach Anspruch 1, wobei die untere Wand (2) wenigstens ein Abstandselement (13, 13') umfasst, welches sich außerhalb des Gehäusesitzes erstreckt, welches dazu geeignet ist, einen minimalen Abstand für die Positionierung des Kabelkanals relativ zu einer Referenzebene bereitzustellen, wobei sich das wenigstens eine Abstandselement (13, 13') parallel zu der longitudinalen Achse des Kabelkanals erstreckt.

10. Gehäuseanordnung (1, 100) nach Anspruch 9, wobei die Referenzebene zu der Gruppe gehört, bestehend aus: einer Wand, einem Boden, einer Decke.

11. Gehäuseanordnung (1, 100) nach Anspruch 6, wobei die Konkavität (8, 8') und das Abdeckelement (14, 14') derart sind, dass sie mit dem Teil der zweiten Befestigungsmittel in Schnappeingriff treten.

12. Gehäuseanordnung (1, 100) nach Anspruch 7, wobei die Mehrzahl von Rippen (20, 20'), welche dazu geeignet sind, mit den zweiten Befestigungsmitteln (105, 105') zusammenzuwirken, an einem ersten Abschnitt (15, 15') des Abdeckelements (14, 14') verteilt sind.

13. Gehäuseanordnung (1, 100) nach einem der vorhergehenden Ansprüche, wobei die Reibmittel und die Halterungsmittel koextrudierte sind, wobei der Kabelkanal aus einem Kunststoffmaterial hergestellt ist.

14. Gehäuseanordnung (1, 100) nach Anspruch 1, wobei der Kabelkanal (1) ferner wenigstens eine Trennwand (23) umfasst, welche sich in einer im Wesentlichen vertikalen Richtung von der unteren Wand (2) und parallel zu der longitudinalen Achse des Kabelkanals (1) erstreckt, wobei die Trennwand (23) den Gehäusesitz (4) in weitere sekundäre Gehäusesitze (4') teilt.

15. Gehäuseanordnung (1, 100) nach Anspruch 1, wobei die Reibmittel Kunststoffmaterial umfassen.

16. Gehäuseanordnung (1, 100) nach Anspruch 15, wobei das Kunststoffmaterial ein Polyvinyl-Harz oder ein thermoplastischer Gummi ist.

17. Gehäuseanordnung (1, 100) nach Anspruch 16, wobei das Polyvinyl-Harz Polyvinylchlorid, PVC, ist.

18. Gehäuseanordnung (1, 100) nach Anspruch 17, wobei das Polyvinyl-Harz einen Plastifizierer in einem Gewichtsverhältnis umfasst, welches zwischen 20-50 % liegt, vorzugsweise zwischen 30-40 % liegt.

19. Gehäuseanordnung (1, 100) nach Anspruch 16, wobei der thermoplastische Gummi eine Shore A Härte aufweist, welche zwischen 20-80 liegt, vorzugsweise zwischen 50-70 liegt.

## Revendications

1. Ensemble de boîtier (1, 100) comprenant :
- une goulotte (1) pour maintenir des fils électriques ou similaires comprenant une paroi inférieure (2) et deux parois latérales (3, 3') s'étendant depuis ladite paroi inférieure, la paroi inférieure (2) et les deux parois latérales (3, 3') définissant un siège de boîtier pour les fils électriques ou similaires, lesdites parois latérales (3, 3') étant pourvues de premiers moyens de fixation (6 à 11) respectifs ;
- un raccord (100) comprenant de seconds moyens de fixation (104, 105) conçus pour venir en prise avec lesdits premiers moyens de fixation afin d'appliquer le raccord sur la goulotte, ledit raccord (100) comprenant une première (101) et une seconde (101') voies reliées par une voie principale (102), lesdites première (101) et seconde (101') voies étant sensiblement transversales par rapport à ladite voie principale (102), lesdits seconds moyens de fixation (104, 105) comprenant des nervures (104, 104') formées sur une surface intérieure (103) de ladite voie principale (102), lesdites nervures (104) faisant saillie depuis la surface intérieure dans une direction sensiblement perpendiculaire à ladite voie principale (102), **caractérisé en ce que** lesdits premiers moyens de fixation comprennent des moyens de support (6 à 11) et des moyens de frottement (22) répartis sur les moyens de support, lesdits moyens de support (6 à 11) comprenant, pour au moins l'une desdites parois latérales, une partie d'extrémité (6) de la paroi latérale correspondante, lesdits moyens de frottement (22) étant composés d'un matériau ayant une première rigidité différente d'une seconde rigidité associée aux moyens de support, lesdits moyens de frottement comprenant, pour au moins l'une desdites parois latérales, un clapet (22) s'étendant parallèlement à au moins une partie d'un axe longitudinal de la goulotte et de manière à avoir un côté relié à la partie d'extrémité et un côté opposé libre, qui fait face au siège de boîtier,
et **en ce que** ledit clapet (22) est interposé entre lesdits premiers moyens de fixation (6 à 11) et lesdites nervures (104, 104') lorsque le raccord est appliqué sur la goulotte, lesdites nervures (104, 104') du raccord appuyant contre le clapet (22) de la paroi latérale (3).

2. Ensemble de boîtier (1, 100) selon la revendication 1, dans lequel ledit clapet (22) est réparti sur lesdits premiers moyens de fixation (6 à 11).

3. Ensemble de boîtier (1, 100) selon la revendication 1, dans lequel ladite première rigidité est inférieure à la seconde rigidité de telle sorte que ledit clapet peut être pressé pour adhérer sensiblement à des parties des seconds moyens de fixation (104, 105, 104', 105') de façon à contrecarrer toute sortie involontaire du raccord de la goulotte.

4. Ensemble de boîtier (1, 100) selon la revendication 1, dans lequel ledit clapet est flexible de façon à être déformé sous l'action des seconds moyens de fixation du raccord.

5. Ensemble de boîtier (1, 100) selon la revendication 4, dans lequel ledit clapet, lorsqu'il est déformé, génère une interférence avec les seconds moyens de fixation en contrecarrant un découplage involontaire par le raccord.

6. Ensemble de boîtier (1, 100) selon au moins l'une des revendications précédentes, dans lequel :
- lesdits moyens de support (6, 6') comprennent une partie d'une paroi latérale de la goulotte ayant un profil conçu pour définir une concavité (8, 8') faisant face à l'extérieur du siège de boîtier (4), ladite concavité s'étendant parallèlement à l'axe longitudinal de la goulotte ; une partie des seconds moyens de fixation (105, 105') du raccord étant conçue pour s'adapter à l'intérieur de la concavité ;
- lesdits moyens de frottement comprennent un élément de recouvrement (14, 14') pour au moins une partie de la concavité (8, 8') de façon à être interposé entre la concavité et ladite partie des seconds moyens de fixation, ledit élément de recouvrement (14, 14') étant disposé sur une partie correspondante desdits premiers moyens de support (11).

7. Ensemble de boîtier (1, 100) selon au moins l'une des revendications précédentes, dans lequel l'élément de recouvrement (14, 14') est de nature à générer un frottement avec ladite partie des seconds moyens de fixation de façon à contrecarrer un glissement du raccord par rapport à la goulotte dans la direction de l'axe longitudinal.

8. Ensemble de boîtier (1, 100) selon la revendication 7, dans lequel l'élément de recouvrement (14, 14') comprend une pluralité de nervures (20, 20') conçues pour coopérer avec ladite partie des seconds moyens de fixation (105, 105') afin de contrecarrer ledit glissement.

9. Ensemble de boîtier (1, 100) selon la revendication 1, dans lequel la paroi inférieure (2) comprend au moins un élément d'espacement (13, 13') s'étendant vers l'extérieur du siège de boîtier, qui est conçu pour fournir une distance minimale pour le positionnement de la goulotte par rapport à un plan de référence, ledit au moins un élément d'espacement (13, 13') s'étendant parallèlement à l'axe longitudinal de la goulotte.

10. Ensemble de boîtier (1, 100) selon la revendication 9, dans lequel le plan de référence appartient au groupe constitué de : une paroi, un sol, un plafond.

11. Ensemble de boîtier (1, 100) selon la revendication 6, dans lequel ladite concavité (8, 8') et l'élément de recouvrement (14, 14') sont de nature à venir en prise par encliquetage avec ladite partie des seconds moyens de fixation.

12. Ensemble de boîtier (1, 100) selon la revendication 7, dans lequel la pluralité de nervures (20, 20') conçues pour coopérer avec les seconds moyens de fixation (105, 105') sont réparties sur une première partie (15, 15') de l'élément de recouvrement (14, 14').

13. Ensemble de boîtier (1, 100) selon l'une quelconque des revendications précédentes, dans lequel les moyens de frottement et les moyens de support sont coextrudés, la goulotte étant composée d'un matériau plastique.

14. Ensemble de boîtier (1, 100) selon la revendication 1, dans lequel la goulotte (1) comprend en outre au moins une paroi de séparation (23) s'étendant dans une direction sensiblement verticale depuis la paroi inférieure (2) et parallèlement à l'axe longitudinal de la goulotte (1), ladite paroi de séparation (23) divisant le siège de boîtier (4) en sièges de boîtier secondaires (4') supplémentaires.

15. Ensemble de boîtier (1, 100) selon la revendication 1, dans lequel lesdits moyens de frottement comprennent un matériau plastique.

16. Ensemble de boîtier (1, 100) selon la revendication 15, dans lequel ledit matériau plastique est une résine polyvinylique ou un caoutchouc thermoplastique.

17. Ensemble de boîtier (1, 100) selon la revendication 16, dans lequel ladite résine polyvinylique est du polychlorure de vinyle, PVC.

18. Ensemble de boîtier (1, 100) selon la revendication 17, dans lequel ladite résine polyvinylique comprend un plastifiant dans un rapport de poids compris entre 20 et 50 %, de préférence compris entre 30 et 40 %.

19. Ensemble de boîtier (1, 100) selon la revendication 16, dans lequel ledit caoutchouc thermoplastique présente une dureté Shore A comprise entre 20 et 80, de préférence comprise entre 50 et 70.
